# EUROPEAN PATENT APPLICATION

(11) **EP 2 815 924 A1**
(43) Date of publication of application: **24.12.2014**
(21) Application number: 14173167.9
(22) Date of filing: 19.06.2014
(51) Int. Cl.: B60R 9/00

(54) **Slide and pivot loading assembly**

(30) Priority: 19.06.2013 GB 201310952
(71) Applicant: Prater, Peter John, Dursley, Gloucestershire GL11 4GA (GB)
(72) Inventor: Prater, Peter John, Dursley, Gloucestershire GL11 4GA (GB)
(74) Representative: Emerson, Peter James

(57) **Abstract**

A loading assembly for attachment to a vehicle roof comprising a first member comprising an elongate channel, and a second member comprising a projection extending therefrom wherein, in use, the projection engages with the elongate channel for sliding movement therebetween, and the projection defines a pivot axis about which the second member may pivot relative to the first member, and wherein the loading assembly is slidably moveable from a stowed position to an extended position, in which one member is arranged to pivot about the pivot axis relative to the other member. Preferably the loading assembly is mounted to the roof of a vehicle such that, in the extended position, the slid member is pivoted to depend adjacent a lateral side of the vehicle, allowing items to be loaded onto the loading assembly.

## Description

This invention relates to a loading assembly and a loading method. In particular, it relates to a loading assembly for attachment to the roof of a vehicle.

### Background

Roof racks and roof boxes may often be provided on vehicles to increase their storage capacity. However, many prior art roof racks and boxes are impractical in that their location on the roof of the vehicle makes them inaccessible to the average user due to their height.

Prior art roof boxes and racks may require the use of a step ladder to load and unload them. This can be inconvenient, as carrying the ladder in or on the vehicle negates some of the benefit of the increased storage space provided by the roof rack / box. Additionally, loading or unloading a roof box while stood on a step ladder can be hazardous, particularly if the vehicle is parked on an incline or a busy road.

Another drawback of prior art roof boxes and racks is that many of them also cause vehicles to have a high wind resistance when large items are loaded onto them. This is especially the case with bicycles, which often must be stored on roof racks in a vertical orientation and so present a large cross-section to the air flowing over the vehicle in motion.

It would be advantageous to provide a loading assembly suitable for use as a roof rack, or in conjunction with a roof box, which could be loaded and unloaded from ground level without the need for a step ladder. Additionally, it would be advantageous to provide a loading assembly in which items loaded in a vertical orientation when the loading assembly is in a loading position are moved into a horizontal orientation when the loading assembly is in a stowed position.

### Description of the Invention

To overcome the drawbacks associated with prior art frame assemblies, the present invention provides a loading assembly which includes a second member which may slide and pivot relative to a first member.

### Summary of the invention

In accordance with a first aspect of the present invention there is provided a loading assembly for attachment to a vehicle roof comprising:
a first member comprising an elongate channel; and
a second member comprising a projection extending therefrom; wherein,
in use, the projection engages with the elongate channel for sliding movement therebetween, and
the projection defines a pivot axis, and wherein the loading assembly is slidably moveable from a stowed position to an extended position, in which one member is arranged to pivot about the pivot axis relative to the other member.

In accordance with a second aspect of the present invention there is provided a method of loading a vehicle comprising the steps of:
i) providing a loading assembly, the loading assembly comprising:
   a first member comprising at least one elongate channel; and
   a second member comprising a projection extending therefrom, the projection cooperating with the elongate channel for sliding movement therebetween, the projection defining a pivot axis, and wherein the loading assembly is slidably moveable from a stowed position to an extended position, in which one member is arranged to pivot about the pivot axis relative to the other member,
ii) sliding one member relative to the other member from a stowed position into the extended position; and
iii) pivoting the slid member relative to the other member about the pivot axis into a loading position of the loading assembly.

The first member could comprise vehicle roof attachment means to attach the first member to the roof of a vehicle. Optionally, the second member could have vehicle roof box attachment means to attach a vehicle roof box to the second member, or bicycle attachment means to attach at least one bicycle to the second member. The first member could be attached to the roof of a vehicle such that, in the extended position, the second member may pivot to depend adjacent a lateral side of the vehicle.

Conversely, the second member could have vehicle roof attachment means to attach the second member to the roof of a vehicle. Optionally, the first member could have vehicle roof box attachment means to attach a vehicle roof box to the first member, or bicycle attachment means to attach at least one bicycle to the first member. The second member could be attached to the roof of a vehicle such that, in the extended position, the first member may pivot to depend adjacent a lateral side of the vehicle.

The elongate channel could comprise a gap in a wall thereof which allows the projection to disengage from the channel in the extended position.

The second member could be elongate, and comprise at least one further projection extending therefrom. The at least one further projection could be off-set from the pivot axis of the second member, optionally located at an end of the second member. Each projection could be disengaged from the elongate channel through the gap to separate the second member from the first member.

The pivot axis could intersect the centre of mass of the second member.

The first member could comprise a pair of parallel channels separated by spacers.

The second member could comprise a substantially planar rack.

### Detailed description

The invention will now be described with reference to the accompanying drawings, in which:
Fig. 1 schematically shows a loading assembly in accordance with a first embodiment of the present invention in a stowed position;
Fig. 2 schematically shows the loading assembly of Fig. 1, the second member having been slid with respect to the first member;
Fig. 3 schematically shows the loading assembly of Fig. 1, the second member having been pivoted with respect to the first member;
Fig. 4 schematically shows the loading assembly of Fig. 1 in a loading position;
Fig. 5 schematically shows a loading assembly in accordance with a second embodiment of the present invention in a stowed position; and
Fig. 6 schematically shows the loading assembly of Fig. 5, the second member having been slid with respect to the first member;

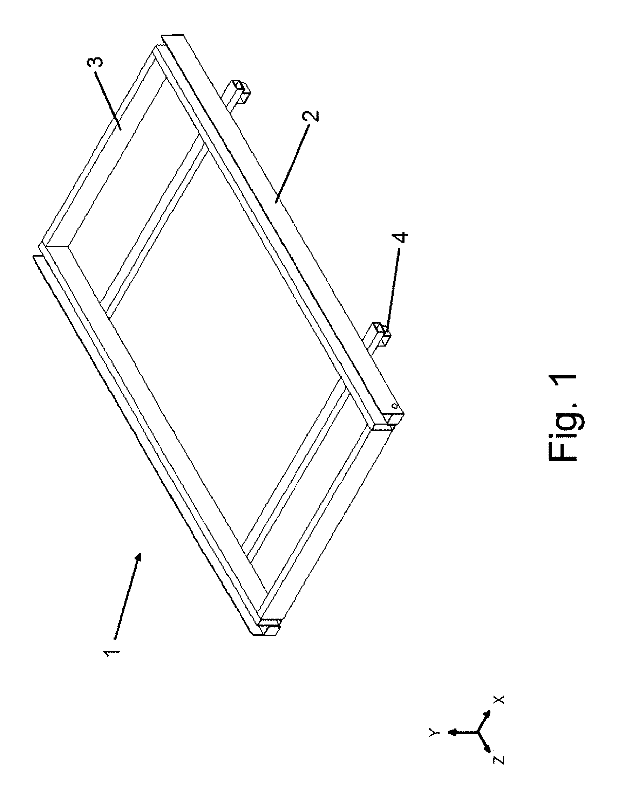

A loading assembly 1 according to an embodiment of the invention is schematically shown in Fig. 1. The loading assembly 1 comprises a first member 2 and a second member 3. The first member 2 has vehicle roof attachment means 4 to attach the first member to the roof of a vehicle. In the embodiment shown, the first member 2 attaches to the roof of a vehicle using an existing roof rail, the attachment means 4 comprising a bracket on the ends of both of two cross beams, or spacers. The loading assembly 1 is shown in a stowed position in Fig. 1, in which the second member 3 lies parallel to the first member 2.

In the embodiments shown in all of Figs. 1-6 the first member 2 would preferably be mounted on a vehicle with +/- X in the co-ordinate scheme shown representing the longitudinal direction of the vehicle and +/- Z representing a lateral direction of the vehicle. The terms "longitudinal" and "lateral" are intended to refer to these directions hereafter.

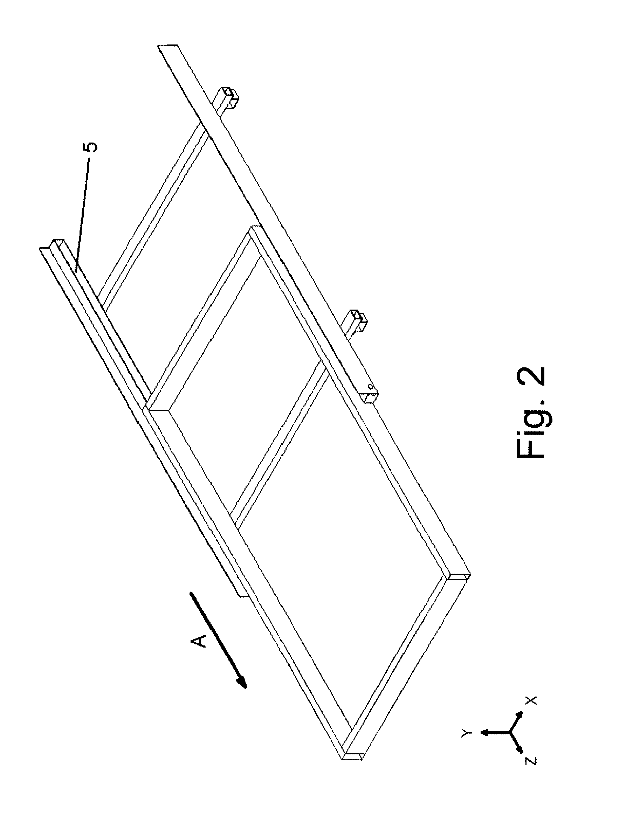

In Fig. 2 the second member 3 has been slid with respect to the first member 2. In this view a channel 5 of the first member 2 can be seen. The first member 2 comprises a pair of parallel channels 5 separated by spacers (although alternatively just one channel could also be used), with which corresponding projections of the second member 3 are slidably engaged. The second member 3 has been slid in the direction indicated by arrow A into an extended position, in which the second member 3 may pivot around the pivot axis relative to the first member 2. In a preferred embodiment the first member 2 of the loading assembly is mounted on the roof of a vehicle such that the direction indicated by arrow A is a lateral direction to the longitudinal axis of the vehicle.

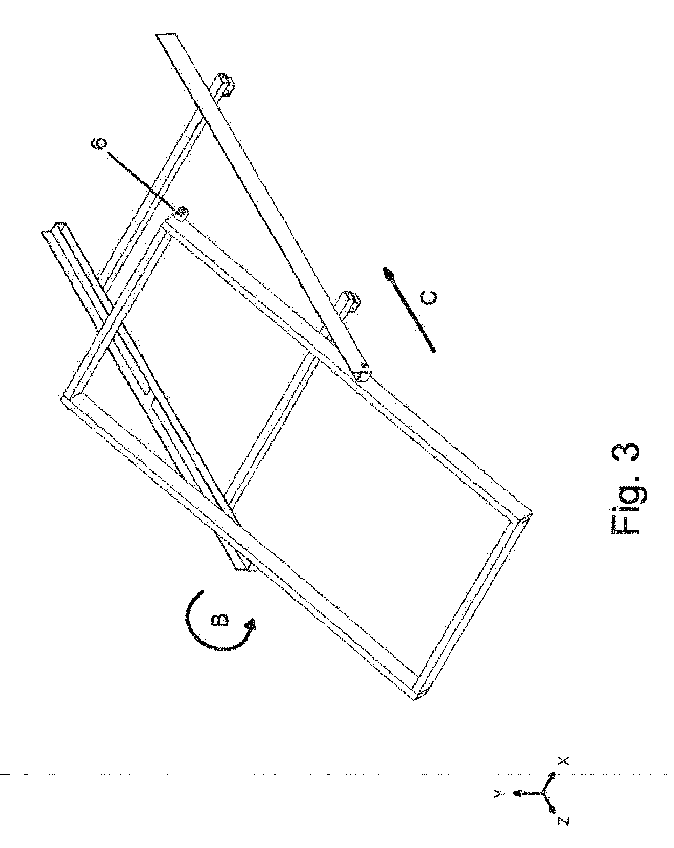

In Fig. 3 the second member 3 has been pivoted with respect to the first member 2. The second member 3 comprises a plurality of projections. Only one projection 6 is visible in this view, this projection comprising an off-set projection which is off-set from the pivot point of the second member 3. Additionally, there is at least one pivot projection (not shown) which is proximate a pivot axis P of the second member 2. The pivot projection is located half way along the length of the second member 2, and so the pivot axis intersects the centre of mass of the second member 3. In the embodiment shown in Figs 1-4, the second member 3 comprises a plurality of projections, however in practice the second member 3 could comprise only one projection.

There is a gap 7 provided in an upper wall of each of the parallel channels 5 of the first member 2 to allow the off-set projections to disengage from the channel as the second member 3 pivots. In a preferred embodiment, the second member 3 may be slid back along the first member 2, at approximately the angle shown in the direction indicated by arrow C, until the pivot projections reach the gap 7. The pivot projections may then be disengaged from the channel 5 through the same gap 7 as the off-set projections 6, and the second member 3 may be separated from the first member 2.

To aid the removal of the second member 3 from the first member 2, a lip 8 has been formed in the upper wall of the channels 5 of the first member. When the pivot projections have been disengaged from the channels 5, the second member 3 may be removed in either lateral direction with the pivot projections resting on the tops of the channels 5. The lip 8 prevents the second member 3 from slipping off the first member in the longitudinal direction.

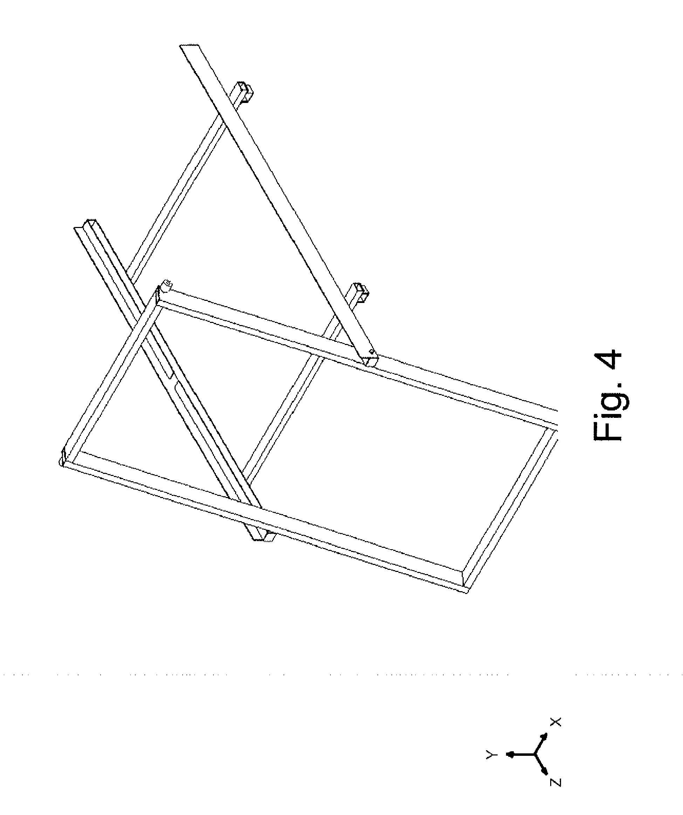

In Fig. 4 the second member 3 has been further pivoted about the pivot axis P in the direction indicated by arrow B and the loading assembly 1 is now in a loading position, i.e. a position in which items may be loaded onto the second member 3. In a preferred embodiment, the loading assembly 1 is mounted on a vehicle roof via the vehicle roof attachment means 4 of the first member 2 such that the second member is pivoted to depend adjacent a lateral side of the vehicle when the loading assembly 1 is in the loading position. The second member 3 comprises vehicle roof box attachment means (not shown) or bicycle attachment means (not shown) to allow one or more roof box or bicycle to the second member 3.

This has the benefit that, when parked on a road, the loading assembly may be loaded by a user at the side of the vehicle, for example on a pavement. Another benefit is that items which are loaded in a first orientation (e.g. vertically) when the loading assembly 1 is in the loading position lie in a second orientation (e.g. horizontally) when the loading assembly 1 is returned to the stowed position. For items such as bicycles, this can reduce the wind resistance created when the vehicle is in motion, and hence increase fuel economy. An additional benefit of this embodiment is that, when the loading assembly 1 is in the loading position, half of the second member 3 is below the height of the roof of the vehicle. This means that items may be loaded onto the loading assembly (or a roof box may be attached to the second member 3) without the need for a step-ladder.

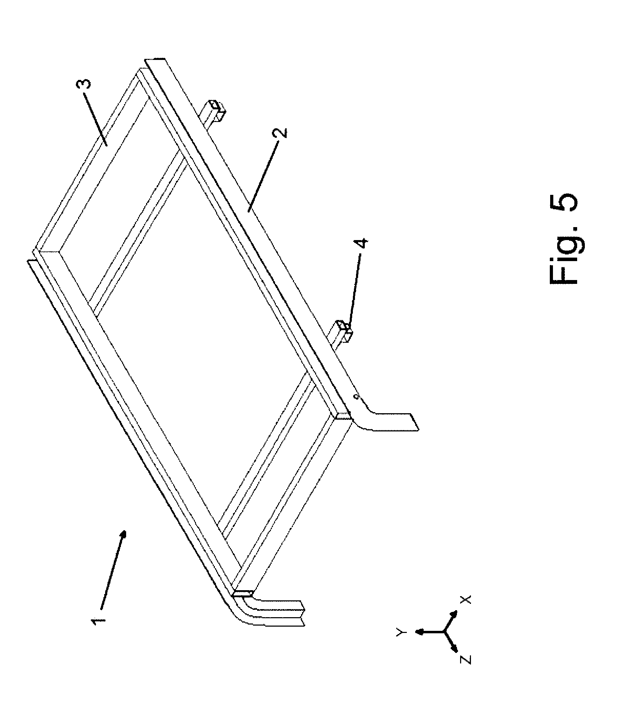

Fig. 5 schematically shows a loading rack according to a second embodiment of the invention. It represents only a slight modification to that shown in Figs. 1-4, and like reference numerals have been retained where appropriate.

In Fig. 5, a loading assembly 1 comprises a first member 2 and a second member 3. The first member 2 has vehicle roof attachment means 4 to attach the first member to the roof of a vehicle. The first member 2 attaches to the roof of a vehicle using an existing roof rail, the attachment means 4 comprising a bracket on the ends of both of two cross beams, or spacers. The loading assembly 1 is shown in a stowed position in Fig. 5, in which the second member 3 lies parallel to the first member 2. In this embodiment, the first member 2 has curved sections at one end. When the loading assembly 1 is attached to the roof of a vehicle, these curved sections hang over a side of the vehicle (preferably a lateral side of the vehicle).

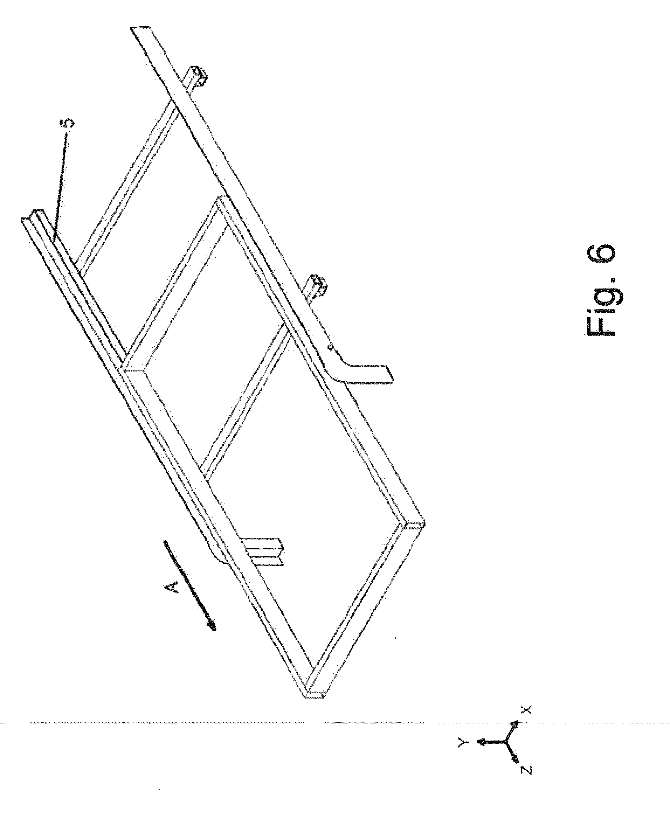

Fig. 6 shows the loading assembly of Fig. 5 with the second member 3 having been slid with respect to the first member 2. The channels 5 in the first member 2 also extend into the curved sections. Consequently, a pivot projection (not shown) formed in the second member 3 may also move down the side of the vehicle when the loading assembly 1 is moved from a stowed position to an extended position, in which one member is arranged to pivot about the pivot axis relative to the other member. Allowing the pivot projection to move down the side of the vehicle moves the entire second member 3 to be closer to the ground in the extended position. This makes it easier to load items onto the loading rack 1.

Although not shown in the particular embodiments of Figs 1-6, the invention of the present application may be implemented in various additional ways. For example, the channel and projections may be swapped around, i.e. projections may be formed on the first member 2 and channels may be formed on the second member 2. Padding may be provided on the lower surface of the second member 2 to prevent it from scratching or denting the side of the vehicle in the loading position. The second member 2 could be arranged to pivot closer to its end, to allow more of the second member 2 to extend below the height of the roof of the vehicle in the loading position. A handle may be formed on an end of the second member 2 to facilitate a user to slide and pivot the second member 2. A locking member may be formed on the second member 2 to retain it in the stowed position, and to prevent accidental sliding movement when the vehicle is in motion.

In other embodiments, one of the members may attach directly to mounting points provided on the vehicle roof, or to laterally-extending roof bars or a roof-rack.

The invention is not limited to the specific embodiments disclosed above, and other possibilities will be apparent to those skilled in the art.

## Claims

1. A loading assembly for attachment to a vehicle roof comprising:
a first member comprising an elongate channel; and
a second member comprising a projection extending therefrom; wherein,
in use, the projection engages with the elongate channel for sliding movement therebetween, and
the projection defines a pivot axis, and wherein the loading assembly is slidably moveable from a stowed position to an extended position, in which one member is arranged to pivot about the pivot axis relative to the other member.

2. A loading assembly according to claim 1, wherein the elongate channel comprises a gap in a wall thereof which allows the projection to disengage from the channel in the extended position.

3. A loading assembly according to claim 1 or 2, wherein the second member is elongate, and comprises at least one further projection extending therefrom.

4. A loading assembly according to claim 3, wherein the at least one further projection is off-set from the pivot axis of the second member.

5. A loading assembly according to claim 4, wherein said off-set projection is located at an end of the second member.

6. A loading assembly according to any of claims 3 to 5, when dependent on claim 2, wherein each projection may be disengaged from the elongate channel through the gap to separate the second member from the first member.

7. A loading assembly according to any of claims 1 to 4, wherein the pivot axis intersects the centre of mass of the second member.

8. A loading assembly according to any preceding claim, wherein the first member comprises a pair of parallel channels separated by spacers.

9. A method of loading a vehicle comprising the steps of:
i) providing a loading assembly, the loading assembly comprising:
a first member comprising at least one elongate channel; and
a second member comprising a projection extending therefrom, the projection cooperating with the elongate channel for sliding movement therebetween, the projection defining a pivot axis, and wherein the loading assembly is slidably moveable from a stowed position to an extended position, in which one member is arranged to pivot about the pivot axis relative to the other member,
ii) sliding one member relative to the other member from a stowed position into the extended position; and
iii) pivoting the slid member relative to the other member about the pivot axis into a loading position of the loading assembly.

10. A method according to claim 9, wherein the elongate channel comprises a gap which allows the projection to disengage from the channel in the extended position.

11. A method according to either of claims 9 or 10, wherein the second member is elongate, and comprises at least one further projection.

12. A method according to claim 11, wherein the at least one further projection is off-set from the pivot axis of the second member.

13. A method according to claim 12, wherein said projection is located at an end of the second member.

14. A method according to any of claims 1 to 13, when dependent on claim 10, wherein each projection may be disengaged from the elongate channel through the gap to separate the second member from the first member.

15. A method according to any of claims 9 to 14, wherein the pivot axis intersects the centre of mass of the second member.
